# EUROPEAN PATENT APPLICATION

(11) **EP 2 560 137 A1**
(43) Date of publication of application: **20.02.2013**
(21) Application number: 12180540.2
(22) Date of filing: 15.08.2012
(51) Int. Cl.: G06Q 20/00

(54) **Electronic transaction system**

(30) Priority: 16.08.2011 TW 100129299
(71) Applicant: M-Media Co., Ltd., Taipei City 106 (TW)
(72) Inventor: Chen, Gi Gi, Taipei city 106 (TW)
(74) Representative: Baldwin, Mark

(57) **Abstract**

The present invention is related to an electronic transaction system, particularly to an electronic transaction system which is able to use a variety of cards or tags, and is free from being misappropriated and skimmed. The system comprises a server, a plurality of terminals and a plurality of characteristic code carriers. The server is provided with a member database for storing account information, amount of electronic cash and a characteristic code of each member. Each terminal is connected to the server via a network, and is used for payment, top up value, consumption inquiry, account creation, changing or stopping the characteristic code carrier and etc.

## Description

### FIELD OF THE INVENTION

The invention is relates to electronic transaction systems, particularly to electronic transaction systems able to use a variety of cards or tags.

### BACKGROUND

An electronic wallet is a means of payment used by customers in business activities, such as as a means of payment for small value purchases or when purchasing small-value commodities. Nowadays, electronic transaction systems are being used in many countries all over the world to replace cash transactions.

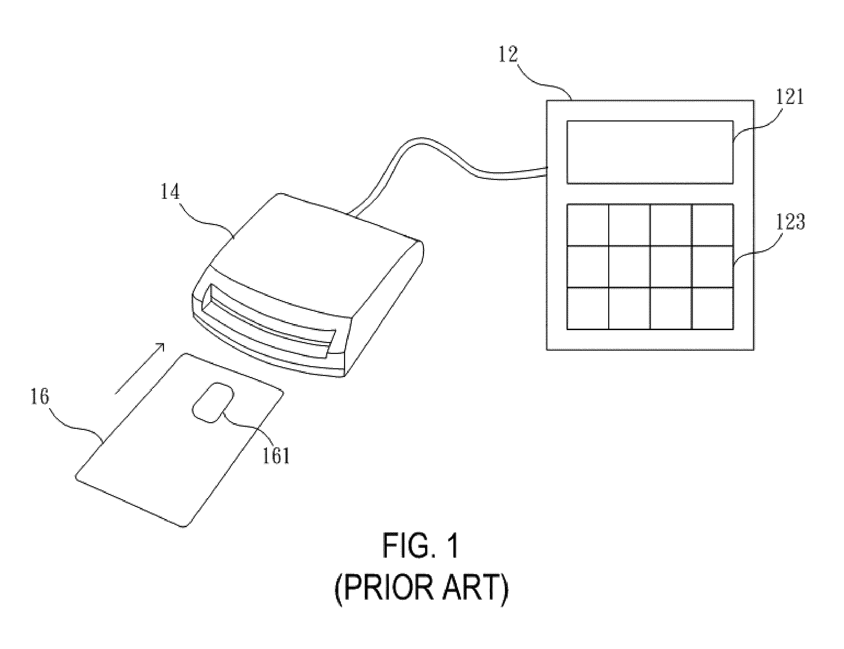

FIG. 1, illustrates use of a conventional electronic wallet. The electronic wallet is developed from an integrated circuit card (IC card) 16. The IC card 16 has a value top-up function, ie the card is provided therein with an IC 161 for data access. The IC card 16 is stored with a value of cash or other electronic currencies by banks or the user, and can be used for payment at a point of sale (POS) system 12 installed with the same electronic wallet system.

In general, the POS system 12 comprises a display 121, a keyboard 123 and a card reader 14. After the IC card 16 is inserted into the card reader 14, electronic cash information stored in the IC 161 can be read by the POS system 12. The cashier uses the keyboard 123 to select the function of the POS system 12, such as the deduction of an amount due for payment, a top-up value, consumption enquiry, etc., The operations are displayed on the display 121 for review by the user. After confirmation, updated electronic cash information can be written into the IC 161 of the IC card 16.

In some electronic wallet systems, a radio frequency identification (RFID) card is adopted as a carrier of the electronic cash. In this case, the card is provided with an RFID tag for storing data related to electronic cash. In such a system, an RFID tag reader is used for data access of the RFID tag in the RFID card. The other operations are similar to those of the above-mentioned IC card system.

In the aforementioned electronic wallet system, a plastic card can be used to replace cash transactions for the purchase of small value commodities or services. But systems adopted by shops are incompatible. For different shops, different cards are needed for electronic wallet transactions. However, it is not convenient for users to carry many cards and not environmentally friendly to produce such an amount of cards.

In addition, the cards used in most electronic wallet systems are bearer cards, which are equivalent to cash. If the card gets lost, the electronic cash may be accessed by unauthorised users with little risk of detection. Therefore, current electronic wallet systems are not particularly secure.

Near Field Communication (NFC) technology is being introduced by companies. It is necessary for NFC technology to dispose an NFC control chip, an antenna and a secure element for anti-interference in a smart phone. An application program for controlling system operation and data access also needs to be installed in the smart phone. In application as an electronic wallet transaction, security may be enhanced compared with bearer cards, but the cost of smart phones to be used as the carriers is necessarily too high. Moreover, the tangible and intangible cost due to the increase in elements and the modification of the circuit structure of the smart phone needed for the operation of the NFC technology may have a significant affect on its popularity.

### SUMMARY OF THE INVENTION

It is an object of the invention to provide an electronic transaction system that is able to use a variety of cards or tags. It is a further or alternative object of the invention to provide an electronic transaction system that is more secure than a bearer card system so as to reduce the likelihood of misappropriation of a user's electronic cash or skimming. It is a further or alternative object of the invention to provide an alternative to existing products on the market.

It is a further or alternative object of the invention to provide an electronic transaction system, which comprises a server for storing account information and amount of electronic cash of a member, and a plurality of terminals verifying identities of members via characteristic codes before shopping, toping up and etc. Thereby, electronic cash belonging to the member is ensured.

It is a further or alternative object of the invention to provide an electronic transaction system, which verifies identities of members by means of characteristic code carriers, and access passwords input by members on shopping. Thereby, dual verification for the guarantee of electronic transaction may be provided.

It is a further or alternative object of the invention to provide an electronic transaction system, wherein the terminals can be integrated into the POS systems of shops or service providing units for facilitating bookkeeping integration and shopping.

It is a further or alternative object of the invention to provide an electronic transaction system, in which a member can open an account by inputting a member code at a terminal, and providing a characteristic code carrier for a characteristic code reader to read the characteristic code.

It is a further or alternative object of the invention to provide an electronic transaction system, wherein a password is sent to the member by means of one of short message (SMS), e-mail, post, printing, voice and the combination thereof selectively, by the server after the account is created.

It is a further or alternative object of the invention to provide an electronic transaction system, wherein the member code is selectively one of a national identity number, a passport number, a phone number, a mobile phone number, an e-mail address, a business registration number, a user defined account, a specific account and the combination thereof.

It is a further or alternative object of the invention to provide an electronic transaction system, wherein the member is requested by the server to input and confirm a password of account when the account is created.

It is a further or alternative object of the invention to provide an electronic transaction system, wherein the characteristic code carrier is selectively one of an IC card, an RFID card, an RFID tag, a bar code, a two-dimensional bar code, a quick response (QR) code, a magnetic stripe card and the combination thereof.

It is a further or alternative object of the invention to provide an electronic transaction system, wherein the characteristic code reader is selectively one of an IC card reader, an RFID tag reader, a bar code reader, a two-dimensional bar code reader, a QR code reader, a magnetic stripe card reader and the combination thereof.

It is a further or alternative object of the invention to provide an electronic transaction system, wherein the characteristic code carrier is selectively one of an identification card, a health insurance card, an Easycard, an iCash card, a Taiwan Smart Card, an All-in-One Card, a credit card, a debit card, a cash card, a traffic card, an Octopus card and a member card.

It is a further or alternative object of the invention to provide an electronic transaction system, wherein each member can log in the server through network for account management, consumption inquiry, and changing or stopping the characteristic code carrier.

The invention provides an electronic transaction system comprising: a server provided with a member database for storing account information, amount of electronic cash, and characteristic codes of a plurality of members; a plurality of terminals connected to said server through a network, wherein each of the terminals is provided with a display, an operation keyboard, a characteristic code reader and a member keyboard; and a plurality of characteristic code carriers corresponding to each account respectively, wherein each of the characteristic code carriers comprises a characteristic code; wherein said members carry the corresponding characteristic code carriers having the characteristic codes to be read by the characteristic code reader of the terminal, and input a password via the member keyboard, so as to conduct an activity of one of shopping payment, toping up value, consumption inquiry and the combination thereof, the corresponding amount of electronic cash of the member account in the server is updated automatically when the amount is changed.

In one embodiment of the invention, each of the terminals is integrated into a point of sale (POS) system of a shop or a service providing unit.

In one embodiment of the invention, the terminal is operated with a function of account creation by the operation keyboard, and a user inputs a member code and provides the characteristic code carrier having the characteristic code to be read by the characteristic code reader, in such a way that an account is created in the server.

In one embodiment of the invention, said member code is selectively one of a national identity number, a passport number, a phone number, a mobile phone number, an e-mail address, a business registration number, a user defined account, a specific account, a bar code or the combination thereof.

In one embodiment of the invention, the password of said account is sent to the member by means of one of short message (SMS), e-mail, post, printing, voice and the combination thereof selectively by said server, when said member account is created.

In one embodiment of the invention, the member is requested by said server to input and then confirm the password of said account via said member keyboard, when said account is created.

In one embodiment of the invention, said characteristic code carrier is selectively one of an IC card, radio frequency identification (RFID) card, an RFID tag, a bar code, a two-dimensional bar code, a quick response (QR) code, a magnetic stripe card or the combination thereof.

In one embodiment of the invention, said characteristic code reader is selectively one of an IC card reader, an RFID tag reader, a bar code reader, a two-dimensional bar code reader, a QR code reader, a magnetic stripe card reader or the combination thereof.

In one embodiment of the invention, said characteristic code carrier is selectively one of an identification card, a health insurance card, an Easycard, an iCash card, a Taiwan Smart Card, an All-in-One Card, a credit card, a debit card, a cash card, a traffic card, an Octopus card or a member card.

In one embodiment of the invention, each of the members can log in to the server through a network for account management, consumption inquiry, and changing or stopping the characteristic code carrier.

In one embodiment of the invention, each of the members can change or stop the characteristic code carrier by inputting the member code and the password to the terminal, and operating the terminal with a function of changing or stopping the characteristic code carrier.

In one embodiment of the invention, the member database of said server further stores records of consumptions and top up values corresponding to each account.

In one embodiment of the invention, the display and the operation keyboard of each of the terminals are integrated as a touch panel.

### BRIEF DESCRIPTION OF DRAWINGS

FIG. 1 is a diagram illustrating a conventional electronic wallet.
Fig. 2 is a diagram illustrating an electronic transaction system in accordance with one embodiment of the invention.

### DETAILED DESCRIPTION

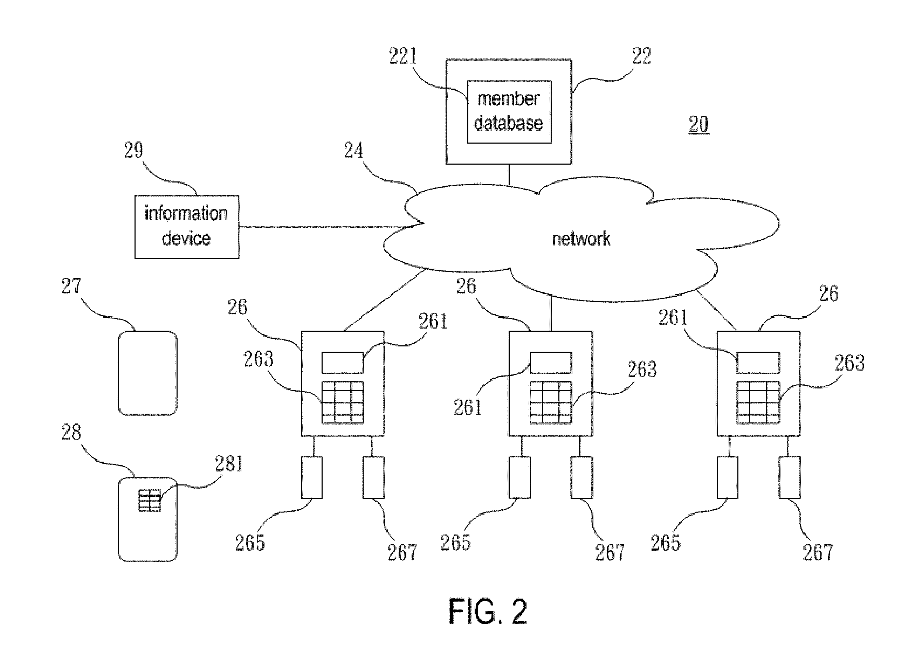

Referring to Fig. 2, an embodiment of an electronic transaction system 20 comprises a server 22, a plurality of terminals 26 and a plurality of characteristic code carriers. Each of the terminals 26 is connected to the server 22 through a network 24.

Since a variety of cards or tags comprise a unique characteristic code, such as an IC card 28, a radio frequency identification card (RFID card) 27 or other types of RFID tag, a bar code, a two-dimensional bar code, a quick response code (QR code) and a magnetic stripe card, it is possible for the electronic transaction system 20 to use cards or tags owned by a user him/herself as the characteristic code carrier. The characteristic code stored in the characteristic code carrier serves as a basis for identifying membership quickly. Alternatively, a new characteristic code carrier may be also provided by a system provider if required by a member.

The server 22 is configured to maintain a member database 221 for storing account information, including the amount of electronic cash held and the characteristic code of each member.

Each of the terminals 26 is provided with a display 261, an operation keyboard 263, a characteristic code reader 265 and a member keyboard 267. The operation keyboard 263 is used by an operator to operate the terminal 26 or select each function of the terminal 26, such as shopping payment, top-up value, consumption enquiry, account creation, changing or stopping the characteristic code carrier etc.

When a user wishes to apply for membership of the electronic transaction system 20, he/she can make an application at a site where a terminal 26 is provided. Firstly, an operator selects the account creation function on the terminal 26 by using the operation keyboard 263. Subsequently, a member code is input by the operator or the user, and then the characteristic code reader 265 is used to read the characteristic code stored in the characteristic code carrier (such as an RFID card 27 or an IC card 28) provided by the user or system operator. An account is then created in member database held in the server 22.

A password for the account may be sent to the member by means of short message (SMS), e-mail, post, printing or voice selectively by the server 22 while the account is created. Alternatively, the member is requested by the server to input and then confirm a password via the member keyboard 267 at the terminal 26.

A user can also use an information device 29 (such as a computer, a notebook, a smart phone, a tablet personal computer, an iPad, a personal digital assistant etc.) to connect to the server 22 via the network 24. After the function of account creation is selected, the member code is input to create an account. After the account is created, the server 22 may also send a password of the account to the member by means of short message (SMS), e-mail, post, printing or voice. After the above steps are completed, the member has to go to a site where a terminal 26 is provided. Here the member can input the member code and the password via the member keyboard 267 and provide a characteristic code carrier having a characteristic code to be read by the characteristic code reader 265. Once the characteristic code is stored in the member database 221, the account creation procedure complete.

Once the account is created, a member can use an information device 29, such as a computer, a mobile phone, a smart phone, a notebook, a tablet personal computer, an iPad, a personal digital assistant etc to connect to the server 22 via the network 24 and log into the account using the account password. Then, activities such as account management, consumption enquiries, changing or cancelling a characteristic code carrier etc may be conducted.

If a payment with the electronic transaction system 20 is desired by the member after shopping, the operator uses an operation keyboard 263 to select the payment function. Subsequently, the member provides the characteristic code carrier (27 or 28) and the characteristic code stored in the characteristic code carrier is read by the characteristic code reader 265 to identify the member. The transaction is directed to the corresponding member account. After the password is input by the member via a member keyboard 267, the payment is deducted from amount deposited in this account. If toping up or a consumption enquiry is required, the member can go through the above steps specifying required function.

If the characteristic code carrier is damaged or lost, the member can to go to a site where a terminal 26 is provided and select the changing characteristic code carrier function via the operation keyboard 263. By inputting the member code and the password and then providing a new characteristic code carrier (27 or 28), a new characteristic code is read by the characteristic code reader 265, thereby completing the process of changing characteristic code carrier.

Each step of the above operation process can be displayed on the display 261 for the review by the member.

In one embodiment, one or more terminals 26 are integrated into the point of sale (POS) system of the shop or service providing unit thereby facilitating the integration of payment and bookkeeping. The shopping records and top-up value of account may be also stored in the member database 221 of the server 22 for enquiry by the member, shop, service providing unit or a related bookkeeper.

In one embodiment, the member code used by the user for the account creation is selected from one of a national identity number, a passport number, a phone number, a mobile phone number, an e-mail address, a business registration number, a user defined account, a specific account, a bar code or a combination of two or more thereof. For the creation of account, any one of an IC card 28, an RFID card 27, an RFID tag, a bar code, a two-dimensional bar code, a QR code or a magnetic stripe card owned by the user him/herself can be used as the characteristic code carrier. The characteristic code carrier may embodied in a current identification card, health insurance card, Easycard, iCash card, Taiwan Smart Card, All-in-One Card, credit card, debit card, cash card, traffic card, Octopus card, member card, other types of carriers having characteristic codes therein etc. The terminals 26 are provided with characteristic code reader 265, such as IC card reader, RFID tag reader, bar code reader, two-dimensional bar code reader, QR code reader, magnetic stripe card reader etc capable of reading the characteristic codes carried by the types of characteristic code the system is allowed to use.

In one embodiment, at least one display 261 and operation keyboard 263 of a terminal 26 are integrated into a touch panel.

By using the electronic transaction system 20, the effect of energy saving and carbon-reducing can be improved. Furthermore, the electronic cash in the electronic transaction system belonging to a member is safeguarded so that it less likely to be misappropriated or skimmed.

The foregoing description is of embodiments of the invention and should not be considered as restrictive. All equivalent variations and modifications in shape, structure, feature in accordance with the appended claims fall within the scope of the invention.

## Claims

1. An electronic transaction system comprising:
a server configured to hold a member database (221) for storing account information, amount of electronic cash and characteristic codes of respective accounts of a plurality of members;
a plurality of terminals (26) connected with said server through at least one network (24), each of the terminals being provided with a display (261), at least one keyboard (263, 267) and a characteristic code reader (265); and
respective characteristic code carriers (27, 28) associated with said accounts, each of the characteristic code carriers carrying a characteristic code;
wherein said members can use said characteristic code carriers to be read by a said characteristic code reader of a said terminal and input a password via a said keyboard (267) to conduct an activity comprising a shopping payment, toping up said electronic cash, consumption enquiry or a combination of two or more thereof and the account of the member in said member database is updated automatically when the amount of electronic cash is changed.

2. The electronic transaction system according to Claim 1, wherein at least one of the terminals (26) is integrated into a point of sale (POS) system of a shop or a service providing unit.

3. The electronic transaction system according to Claim 1, wherein at least one said terminal (26) comprises an operation keyboard (263) for use in account creation and a user keyboard (267) for users to input a member code whereby a user can input a member code and provide a said characteristic code carrier having the characteristic code for the member's account to be read by the characteristic code reader to create an account in the member database (221).

4. The electronic transaction system according to Claim 3, wherein said member code is selectively one of a national identity number, a passport number, a phone number, a mobile phone number, an e-mail address, a business registration number, a user defined account, a specific account, a bar code or a combination of two or more thereof.

5. The electronic transaction system according to Claim 3 or 4, wherein said server is configured to cause a password for said account to be sent to the member by means of one of a short message (SMS), e-mail, post, printing, voice or a combination of two or more thereof when said account is created.

6. The electronic transaction system according to Claim 5, wherein said server is configured to cause the member to be requested to input and then confirm said password via a said member keyboard (267) when said account is created.

7. The electronic transaction system according to any one of the preceding Claims, wherein said characteristic code carrier comprises one of an IC card, a radio frequency identification (RFID) card, an RFID tag, a bar code, a two-dimensional bar code, a quick response (QR) code, a magnetic stripe card or a combination of two or more thereof.

8. The electronic transaction system according to Claim 7, wherein said characteristic code reader (265) comprises an IC card reader, an RFID tag reader, a bar code reader, a two-dimensional bar code reader, a QR code reader, a magnetic stripe card reader or a combination of two or more thereof.

9. The electronic transaction system according to any one of the preceding Claims, wherein said characteristic code carrier is selectively one of an identification card, a health insurance card, an Easycard, an iCash card, a Taiwan Smart Card, an All-in-One Card, a credit card, a debit card, a cash card, a traffic card, an Octopus card or a member card.

10. The electronic transaction system according to any one of the preceding Claims, wherein said server is configured so that each member can log in to the server via said at least one network (24) to permit remote account management, consumption enquiry, and changing or cancelling of the characteristic code carrier associated with the member's account.

11. The electronic transaction system according to Claim 10 when dependent on a claim dependent on claim 4, wherein said server is configured such that each member can change or cancel the characteristic code carrier associated with the member's account by inputting the member code and password to a said terminal (26) and operating the terminal in changing or cancelling the characteristic code carrier mode.

12. The electronic transaction system according to any one of the preceding Claims, wherein the member database (221) is configured to store consumption records and top up values for each account.

13. The electronic transaction system according to any one of the preceding Claims, wherein at least one terminal (26) comprises a display and keyboard integrated as a touch panel.
